# EUROPÄISCHE PATENTSCHRIFT

(11) **EP 1 746 433 B1**
(45) Veröffentlichungstag und Bekanntmachung des Hinweises auf die Patenterteilung: **29.08.2007**
(21) Anmeldenummer: 05015558.9
(22) Anmeldetag: 18.07.2005
(51) Int. Cl.: G01S 1/04, A63B 29/02

(54) **Verfahren und Vorrichtung zum Auffinden eines Verschütteten**
Method and apparatus for finding avalanche victims
Procédé et dispositif pour la détection de personnes enseveliés

(43) Veröffentlichungstag der Anmeldung: 24.01.2007
(73) Patentinhaber: Kampel, Gerald, 82024 Taufkirchen (DE)
(72) Erfinder: Kampel, Gerald, 82024 Taufkirchen (DE)
(74) Vertreter: Bohnenberger, Johannes

(56) Entgegenhaltungen:
- DE-A1- 3 531 726
- US-A- 5 955 982
- US-B1- 6 246 863

## Beschreibung

Die vorliegende Erfindung betrifft ein Verfahren bzw. eine Vorrichtung zum Auffinden eines Verschütteten, insbesondere eines Lawinenverschütteten.

Ein Verfahren zum Auffinden von Verschütteten, das insbesondere bei der Suche von Lawinenverschütteten zum Standard geworden ist, ist die Suche nach dem Senderempfangsprinzip. Hierbei werden von einem Funksender, den der Verschüttete trägt, Signale ausgesendet, die von einem Suchenden bzw. von einer Gruppe von Suchenden mittels eines Funkempfängers empfangen werden. Um eine hohe Kompatibilität zwischen x-beliebigen Funksendern und Funkempfängern zu erreichen, ist die verwendete Signalcharakteristik standardisiert. Bei der Lawinensuche wird beispielsweise eine Frequenz von 457 kHz verwendet.

Die Funkempfänger verfügen über eine oder mehrere Antennen mit einer starken Richtcharakteristik und können zum Peilen des Ursprungs der Signale und somit des Ortes des Verschütteten verwendet werden.

Die Hersteller derartiger Funksender bzw. -empfänger entwickeln diese Geräte stetig weiter, um das Auffinden eines oder mehrerer Verschütteten zu erleichtern. Dies ist besonders wichtig, da die Retter, die die Funkempfänger bedienen, unter extremem Stress stehen, da jede Sekunde, die für das Auffinden benötigt wird, über Leben und Tod des Verschütteten bzw. der Verschütteten entscheiden kann. Eine Studie hat beispielsweise gezeigt, dass die Überlebenschance eines Lawinenverschütteten vom Zeitpunkt der Verschüttung bereits nach 15 min. rapide absinkt. Moderne Funkempfänger verfügen daher über Anzeigevorrichtungen (vergleiche hierzu die DE 35 31 726 C2), die zusätzlich die jeweilige Stärke eines empfangenen Signals aus einer bestimmten Richtung anzeigen. Diese Anzeige kann beispielsweise in Form von konkreten Entfernungsangaben zwischen Funksender und Funkempfänger erfolgen.

In der Praxis hat es sich gezeigt, dass die sogenannten letzten Meter beim Auffinden eines Verschütteten häufig den schwierigsten Teil der Suche darstellen. In dieser Phase der sogenannten Punktortungsphase spielt die Angabe einer Richtung häufig eine sehr geringe Rolle bzw. kann sogar irreführend sein, da man sich häufig bereits über dem Verschütteten befindet. Auch sind Entfernungsangaben in diesem Stadium oft fehlerhaft und unterscheiden sich nur minimal.

Der vorliegenden Erfindung liegt daher die Aufgabe zugrunde, ein Verfahren sowie eine Vorrichtung zum Auffinden eines Verschütteten bereitzustellen, das bzw. die die Suche nach dem Verschütteten auf den letzten Metern erleichtert und somit den Zeitraum bis zum Auffinden des Verschütteten verkürzt.

Diese Aufgabe wird durch ein Verfahren nach Anspruch 1 bzw. eine Vorrichtung nach Anspruch 17 gelöst.

Weitere vorteilhafte Ausführungsformen werden in den Unteransprüchen aufgeführt.

Insbesondere wird die Aufgabe durch ein Verfahren zum Auffinden eines Verschütteten, insbesondere eines Lawinenverschütteten, mittels eines Funkempfängers mit einer Richtcharakteristik gelöst, umfassend die Schritte:
- Empfangen von Signalen, die von einem Funksender des Verschütteten ausgesendet werden, mit dem Funkempfänger;
- Verarbeiten der empfangenen Signale; und
- Anzeigen einer Ortsinformation des Verschütteten, durch ein Wechseln zwischen einer Such- und einer Punktortungsphase, wobei die Punktortungsphase das wiederholte Durchführen der folgenden Schritte beinhaltet:
   - Bestimmen einer aktuellen Verschüttetenentfernung,
   - Speichern der aktuellen Verschüttetenentfernung und
   - Anzeigen der aktuellen Verschüttetenentfernung sowie mindestens einer gespeicherten zuvor aufgenommenen Verschüttetenentfernung.

Der Vorteil dieses Verfahrens besteht also insbesondere darin, dass in einer ersten Phase der sogenannten Suchphase auf bekannte Art und Weise Ortsinformationen, beispielsweise eine Verschüttetenentfernung und/oder die Richtung des Verschütteten, angezeigt werden. In einer zweiten Phase der Punktortungsphase wird nicht nur die Ortsinformation bestimmt und angezeigt, sondern es findet auch ein zumindest teilweises Speichern und Anzeigen vergangener Ortsinformationen, insbesondere der Verschüttetenentfernungen, statt. Der oder die Suchenden haben also die Möglichkeit, in der Punktortungsphase vergangene und aktuelle Ortsinformationen miteinander zu vergleichen, und können so bei dem Auffinden des Verschütteten bessere Ergebnisse erzielen und den Verschütteten schneller retten.

Wichtig ist hierbei auch das in einer Punktortungsphase mindestens eine gespeicherte Verschüttetenentfernung und die aktuelle Verschüttetenentfernung gleich sein können. Daher können sich die angezeigten Ortsinformationen überdecken.

Es ist vorteilhaft, wenn der Wechsel zwischen den Phasen in Abhängigkeit von den empfangenen Signalen bzw. von deren Charakteristika erfolgt. So ist es für den Suchenden besonders komfortabel, wenn das Wechseln von der Suchphase zur Punktphase und/oder zurück dann erfolgt, sobald eine Stärke eines der empfangenen Signale eine vorbestimmte Schwelle überschreitet bzw. unterschreitet. Das heißt, der Suchende muss den Zeitpunkt, zu dem es vorteilhaft ist, in der Punktortungsphase oder in der Suchphase zu suchen, nicht selbst bestimmen. Dieser Zeitpunkt wird sozusagen automatisch in Abhängigkeit von der Signalcharakteristik festgelegt und der Wechsel entsprechend durchgeführt.

Vorzugsweise wird die Verschüttetenentfernung in Abhängigkeit von den empfangenen Signalen, insbesondere deren Signalstärke, bestimmt. So kann beispielsweise die Amplitude der empfangenen Signale Aufschluss über die Entfernung zwischen Funksender und Funkempfänger geben.

Das Auffinden des Verschütteten wird weiter erleichtert, wenn das Anzeigen in der Punktortungsphase das Anzeigen von mindestens einem graphischen Symbol umfasst. Da, wie bereits beschrieben, das Auffinden für die Suchenden immer eine Extremsituation darstellt, hilft den Suchenden eine bildliche Darstellung wichtiger Informationen, diese Situation zu bewältigen und Fehler zu vermeiden. Diese graphische Darstellung kann rein symbolisch oder eine Mischung aus Symbolen zusammen mit numerischen Werten und/odex Buchstaben sein.

Vorzugsweise umfasst dieses Anzeigen mindestens ein erstes graphisches Symbol für das Anzeigen der aktuellen Verschüttetenentfernung und mindestens ein zweites graphisches Symbol für das Anzeigen der mindestens einen gespeicherten Verschüttetenentfernung. Sind diese Symbole klar unterscheidbar, so ist die dem Suchenden angezeigte Information leichter verständlich. Diese unterschiedliche Darstellung kann beispielsweise durch ein unterschiedliches Darstellen der gleichen Symbole oder durch das Verwenden unterschiedlicher Symbole erzielt werden. Denkbar bei der unterschiedlichen Darstellung von gleichen Symbolen ist beispielsweise das blinkende und/oder dickere bzw. größere und/oder farblich unterscheidbare Darstellen.

In einer bevorzugten Ausführungsform umfasst mindestens eines der ersten graphischen Symbole einen Distanzkreis oder Teile eines Distanzkreises mit einem Radius, der im Bezug zur aktuellen Verschüttetenentfernung steht. In diesem Zusammenhang umfasst bevorzugt auch mindestens eines der zweiten graphischen Symbole einen Distanzkreis oder Teile eines Distanzkreises mit einem Radius, der in Bezug zu einer gespeicherten Verschüttetenentfernung steht. Mittels dieser Kreise wird auf einfache und sehr plastische Weise die aktuelle und mindestens eine weitere Verschüttetendistanz angezeigt. Vorzugsweise liegen die Mittelpunkte der jeweiligen Distanzkreise im Wesentlichen aufeinander. Der Suchende sieht auf einen Blick, ob er sich in Richtung des Verschütteten (kleinerer Distanzkreis) oder von diesem weg (größerer Distanzkreis) bewegt.

Vorzugsweise umfasst die Punktortungsphase ein wiederholtes Bestimmen und Anzeigen derjenigen gespeicherten Verschüttetenentfernung, die der geringsten gespeicherten Verschüttetenentfernung entspricht. Das heißt, der Suchende bekommt, sobald er sich in der Punktortungsphase befindet, zu jedem Zeitpunkt die aktuelle Verschüttetenentfernung sowie zumindest die Verschüttetenentfernung angezeigt, die der von ihm jemals erreichten geringsten Distanz zum Verschütteten entspricht. Durch den Vergleich dieser beiden Größen bzw. Symbole kann der Suchende die Fortschritte seiner Suche feststellen.

Vorzugsweise umfasst die Suchphase, die meistens vor der Punktortungsphase absolviert wird, ein Anzeigen einer, insbesondere numerischen, Verschüttetenentfernung und/oder ein Anzeigen einer Verschüttetenrichtung.

Bevorzugt erfolgt ein Löschen der gespeicherten Verschüttetenentfernungen bei einem Wechseln von der Punktortungsphase in die Suchphase. Alternativ sollten auch Mittel vorgesehen werden, die ein manuelles Löschen ermöglichen. Diese Mechanismen haben den Vorteil, dass die Anzeige automatisch oder manuell zurückgesetzt werden kann, wenn eine erste Punktortungsphase zu keinem befriedigendem Ergebnis führt. Der Suchende hat so die Möglichkeit, entweder Suchphase und Punktortungsphase zu wiederholen oder nur die Punktortungsphase erneut auszuführen.

Vorzugsweise umfasst die Punktortungsphase auch ein Anzeigen einer Tendenz. Dies Tendenz wird ermittelt, indem gespeicherte Verschüttetenentfernungen mit der aktuellen Verschüttetenentfernung verglichen werden. Bevorzugt wird bei dem Vergleich die geringste gespeicherte Verschüttetendistanz mit der aktuellen Verschüttetendistanz verglichen. Besonders bedienerfreundlich ist das Anzeigen einer Tendenz, wenn sich der Suchende von dem Verschütteten weg bewegt (die Verschüttetendistanz wächst).
Zur Anzeige der Distanz könne Tendenzpfeile dienen. Werden zur Anzeige der Verschüttetenentfernungen Kreise um einen gemeinsamen Mittelpunkt verwendet, ist die Darstellung der Tendenz mittels Pfeilen, die bei größer werdender Verschüttetenentfernung vom Mittelpunkt wegzeigen und bei kleiner werdender Verschüttetenentfernung zum Mittelpunkt hinzeigen, zu bevorzugen.

Die Aufgabe wird auch durch eine Vorrichtung, insbesondere ein Lawinenverschüttetensuchgerät, zum Auffinden eines Verschütteten, gelöst, die umfasst:
- Einen Empfänger mit einer Richtcharakteristik zum Empfangen von Signalen, die von einem Verschütteten ausgesendet werden;
- Eine Bearbeitungseinrichtung zum Verarbeiten der empfangenen Signale und zum Bestimmen einer aktuellen Ortsinformation, mindestens bestehend aus: einer Verschüttetendistanz;
- Einer Anzeigeeinrichtung zum Anzeigen der aktuellen Ortsinformation;
- Einer Steuereinrichtung zum Steuern der Anzeigeeinrichtung;
- Einer Speichereinrichtung zum Speichern mindestens einer Ortsinformation.

Hierbei ist die Vorrichtung dadurch gekennzeichnet, dass die Steuereinrichtung eine Unterscheidungseinrichtung umfasst, die zwischen einer Suchphase und einer Punktortungsphase unterscheidet und wechselt, und dass die Steuereinrichtung die Anzeigeeinrichtung derartig steuert, dass in der Punktortungsphase die aktuelle Ortsinformation und mindestens eine gespeicherte, zuvor aufgenommene, Ortsinformation angezeigt wird.

Die Vorzüge dieser Vorrichtung ergeben sich analog zu den bereits beschriebenen Vorzügen.

Weitere Einzelheiten, Vorteile und Weiterbildungen der Erfindung ergeben sich aus der folgenden Beschreibung eines Ausführungsbeispiels unter Bezugnahme auf die Zeichnungen. Es zeigen:
- Fig. 1: eine schematische Darstellung eines Ausführungsbeispiels eines Lawinenverschüttetensuchgeräts mit einer Anzeigeeinrichtung;
- Fig. 2: eine erste Darstellung von Ortsinformationen zur Anzeige in der Anzeigeeinrichtung aus Fig. 1;
- Fig. 3: eine zweite Darstellung von Ortsinformationen zur Anzeige in der Anzeigeeinrichtung aus Fig. 1;
- Fig. 4: eine dritte Darstellung von Ortsinformationen zur Anzeige in einer Anzeigeeinrichtung aus Fig. 1;
- Fig. 5a: ein Ablaufdiagramm eines Verfahrens zum Auffinden eines Verschütteten, umfassend eine Suchphase und eine Punktortungsphase; und
- Fig. 5b: ein Ablaufdiagramm zu einer Punktortungsphase.

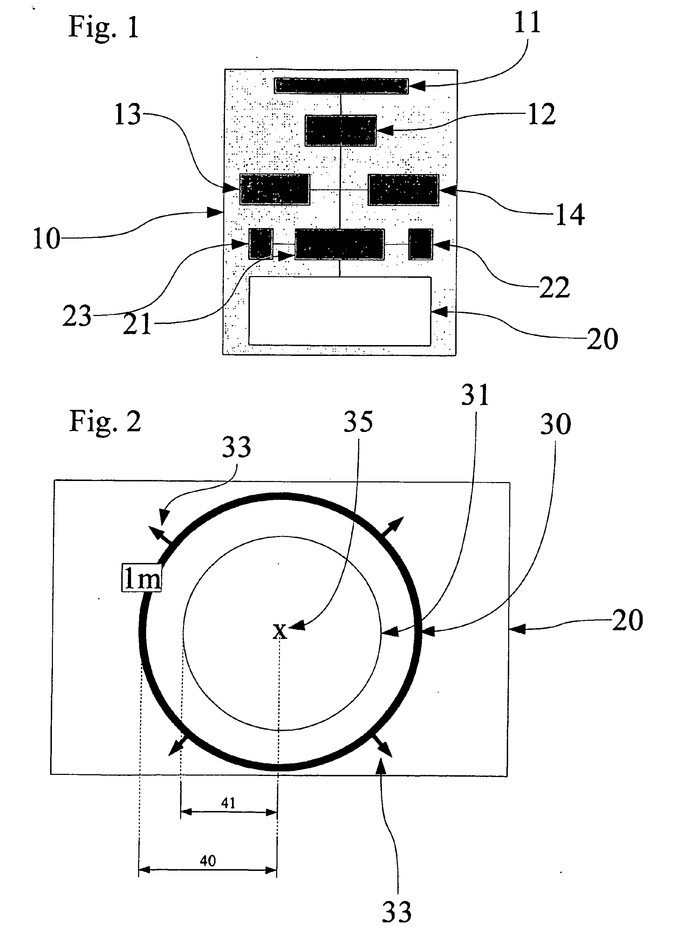

Fig. 1 zeigt eine schematische Darstellung einer Vorrichtung zum Auffinden eines Verschütteten. Insbesondere wird hier ein Lawinenverschüttetensuchgerät 10 dargestellt. Dieses Lawinenverschüttetensuchgerät 10 umfasst eine Anzeigevorrichtung 20 zur Anzeige von mindestens einer Ortsinformation 40-43, 50 (s. Fig. 2-4). Erfindungsgemäß umfasst dieses Lawinenverschüttetensuchgerät 10 des weiteren einen Empfänger 11 mit einer Richtcharakteristik zum Empfangen von Signalen, die von einem Verschütteten ausgesendet werden, eine Verarbeitungseinrichtung 12 zum Verarbeiten der empfangenen Signale und zum Bestimmen einer aktuellen Ortsinformation, eine Steuereinrichtung 21 zum Steuern der Anzeigeeinrichtung 20, eine Speichereinrichtung 13, eine Löscheinrichtung 14 zum Speichern und Löschen mindestens einer vorhergehenden Ortsinformation, sowie eine Unterscheidungseinrichtung 22, die es ermöglicht, zwischen einer Suchphase und einer Punktortungsphase zu unterscheiden. Auch eine Betätigungseinrichtung 23 zur Eingabe von Befehlen ist sinnvoll.

Erfindungsgemäß können in der Anzeigeeinrichtung 20 Darstellungen, wie sie in den Figuren 2 bis 4 zu sehen sind, gezeigt werden. Die Darstellungen können auch weitere Informationen, wie beispielsweise eine aktuelle Temperatur, eine aktuelle Höhe, eine Uhrzeit, eine Suchzeit oder jede beliebige andere Information umfassen.

Erfindungsgemäß unterscheidet die Vorrichtung aus Fig. 1 zwischen einer Suchphase und einer Punktortungsphase. Während die Suchphase dazu geeignet ist, die grobe Position des Verschütteten zu bestimmen, dient die Punktortungsphase dazu, die genaue Position des Verschütteten zu ermitteln.

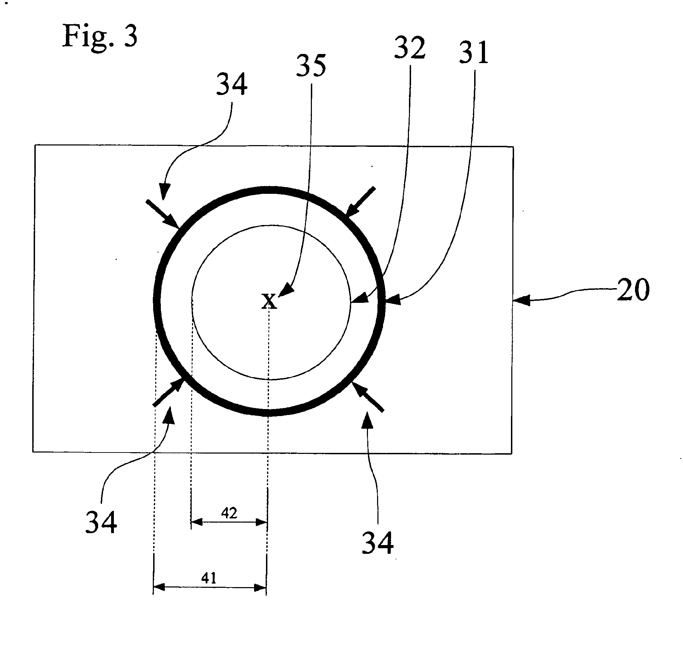

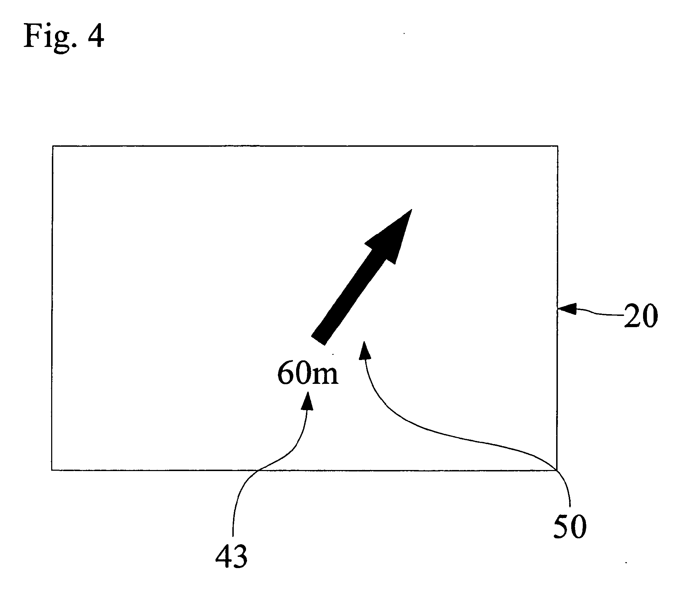

Entsprechend zeigen die Figuren 2 und 3 eine erfindungsgemäße erste und zweite Darstellung in der Punktortungsphase. Demgegenüber zeigt Fig. 4 eine beispielhafte dritte Darstellung, wie sie in der Suchphase angezeigt werden kann.

Genauer gesagt, umfasst Fig. 2 die (rechteckige) Anzeigeeinrichtung 20, auf der ein erster Distanzkreis 30 und ein zweiter Distanzkreis 31 dargestellt werden. Beide Kreise haben den gemeinsamen Mittelpunkt 35, der sich im Zentrum der rechteckigen Anzeigeeinrichtung 20 befindet. Ein erster Radius des ersten Distanzkreises 30 und ein zweiter Radius des zweiten Distanzkreises 31 geben Aufschluss über eine ersten Verschüttetenentfernung 40 bzw. eine zweite Verschüttetenentfernung 41. Der erste Distanzkreis 30 wird fetter dargestellt als der zweit Distanzkreis 31 und gibt die aktuelle Verschüttetenentfernung d an. Der zweite Distanzkreis 31 hat einen kleineren Radius und symbolisiert eine vorhergehende vom dem Lawinenverschüttetensuchgeräte gespeicherte Verschüttetenentfernung. Der Suchende war also schon ein Mal näher am Verschütteten dran. Mehrere erste Tendenzpfeile 33, die vom Mittelpunkt 35 der Distanzkreise wegzeigen, geben an, dass sich der Suchende weiter von der bereits erreichten geringsten Verschüttetenentfernung dmin wegbewegt.
Eine weitere zweite Darstellung zeigt die Fig. 3. Hier werden auf der Anzeigeeinrichtung 20 zusätzlich zu dem in Fig. 2 dargestellten zweiten Distanzkreisen 31 ein weiterer dritter Distanzkreis 32 dargestellt. Die Distanzkreise 31 und 32 haben einen gemeinsamen Mittelpunkt 35. Entsprechend der Fig. 2 haben der zweite Distanzkreis 31 und der dritte Distanzkreis 32einenzweiten bzw. dritten Radius, der mit einer zweiten und dritten Verschüttetenentfernung 41, 42 korrespondiert. Der zweite Distanzkreis 31 gibt die aktuelle Verschüttetenentfernung d an und ist dementsprechend von dem anderen Distanzkreisen 32 unterscheidbar fett dargestellt. Der der dritte Distanzkreis 32 entspricht einer vorhergehenden, gespeicherten Verschüttetenentfernung. Wie bereits in Fig. 2 ist die aktuelle Verschüttetenentfernung d größer als die gespeicherte Verschüttetenentfernung, die der geringsten bereits erreichten Verschüttetenentfernung dmin entspricht. Der Suchende weiß anhand der Distanzkreise 31 und 32 , dass er zu einem vorherigen Zeitpunkt bereits näher an dem Verschütteten war. Mehrere zweite Tendenzpfeile 34, die von dem zweiten Distanzkreis 31 in Richtung des Mittelpunkts 35 zeige, geben an, dass sich der Suchende tendenziell wieder an den Verschütteten annähext.

Im Gegensatz zu der ersten Darstellung aus Fig. 2 und der zweiten Darstellung aus Fig. 3 zeigt die dritte Darstellung in Fig. 4 eine mögliche Anzeige auf der Anzeigeeinrichtung 20 in der Suchphase. Konkret wird hier die Verschüttetenrichtung 50 sowie eine Verschüttetenentfernung 43 angegeben. Die Verschüttetenentfernung wird numerisch in Form einer Meterangabe dargestellt. Die Verschüttetenrichtung, die die relative Richtung des Verschütteten zur Längsachse des Lawinenverschüttetensuchgeräts 10 angibt, wird in Form eines Richtungspfeiles dargestellt.

Wie bereits beschrieben, unterscheidet das Lawinenverschüttetensuchgerät 10 aus Fig.1 zwischen der Punktortungsphase und der Suchphase. Dieser Vorgang wird in dem Flussdiagramm aus Fig. 5a verdeutlicht. Konkret wird hier in einem ersten Schritt die Suche gestartet. Danach wird eine Initialisierung möglicher Variablen vorgenommen. Insbesondere werden hier die Variablen dmin (geringste Verschüttetenentfernung), d1 (vorbestimmte Verschüttetenentfernungsschwelle) initialisiert. In den nächsten Schritten wird das von einem Verschütteten ausgesendete Signal empfangen und verarbeitet. Hierzu dienen ein in dem Lawinenverschüttetensuchgerät vorgesehener Empfänger bzw. eine Verarbeitungseinrichtung. Die Verarbeitungseinrichtung bestimmt mittels des vorverarbeiteten Signals eine Verschüttetenentfernung d. Diese wird in einer Unterscheidungseinrichtung mit dem Verschüttetenentfernungsschwellwert d1 verglichen. Ist die Verschüttetenentfernung d kleiner als der Verschüttetenentfernungsschwellwert d1, so entscheidet die Unterscheidungseinrichtung, dass die Punktortungsphase durchgeführt wird. Im anderen Fall entscheidet die Unterscheidungseinrichtung, dass die Suchphase durchgeführt wird. Nach der Punktortungsphase bzw. der Suchphase wird erneut das von dem Verschütteten ausgesendete Signal empfangen und die bereits beschriebenen Schritte werden wiederholt, bis der Verschüttete aufgefunden wird.

Obwohl in der Ausführungsform in Fig. 5a ein Schwellwert angewandt wird, um zwischen Punktortungsphase und Suchphase zu unterscheiden, sind auch andere Unterscheidungskriterien denkbar. Es können beispielsweise mehrere Schwellwerte verwendet werden, die sich nicht nur an der aktuellen Verschüttetenentfernung, sondern beispielsweise auch an der Verschüttetenrichtung orientieren. Auch können bei der Unterscheidung frühere gespeicherte Verschüttetenentfernungen oder beliebige andere Kriterien herangezogen werden. So liegt es auch im Rahmen der Erfindung, dass beispielsweise der Verschüttetenschwellwert d1 nach der ersten Entscheidung für die Punktortungsphase verändert wird, um beispielsweise in der Anfangsphase der Punktortungsphase ein ständiges Hin- und Herspringen zwischen Punktortungsphase und Suchphase zu verhindern.

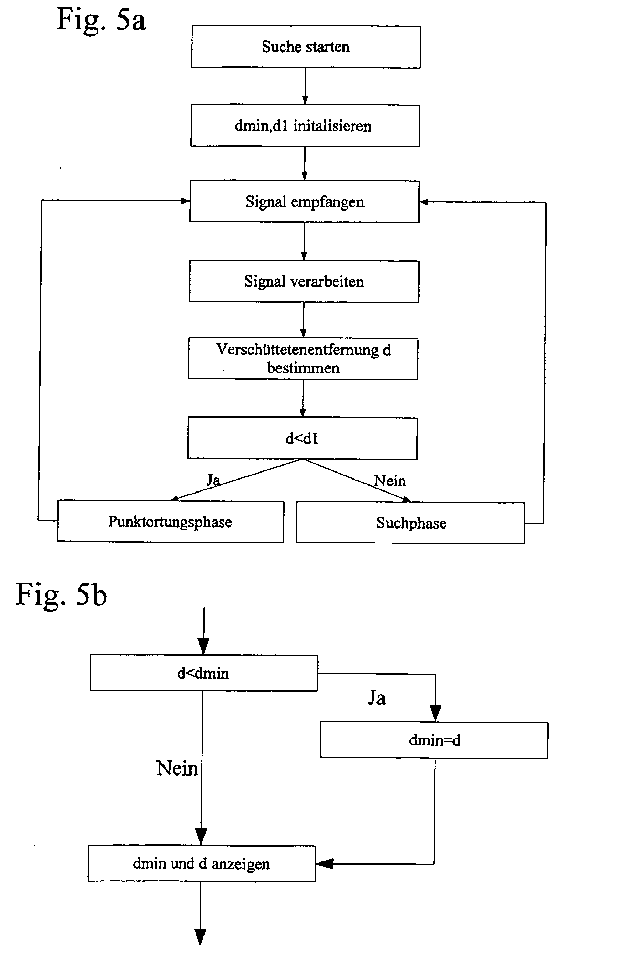

Unter Bezugnahme auf die Fig. 5b wird nun die Vorgehensweise in der Punktortungsphase detailliert beschrieben. In einem ersten Schritt wird die Verschüttetenentfernung d mit einer geringsten, beim ersten Durchlauf entsprechend initialisierten Verschüttetenentfernung dmin verglichen. Ist die aktuelle Verschüttetenentfernung d kleiner als die geringste Verschüttetenentfernung dmin, so wird der Wert der geringsten Verschüttetenentfernung dmin gleich dem Wert der Verschüttetenentfernung d gesetzt. Egal, ob die aktuelle Verschüttetenentfernung d kleiner der geringsten Verschüttetenentfernung dmin ist, in einem letzten Schritt werden beide Verschüttetenentfernungen dmin und d angezeigt. Die Anzeige kann, wie bereits beschieben, entsprechend den Figuren 2 und 3 erfolgen.

Obwohl in der hier beschriebenen, sehr einfachen Ausführungsform nur eine Verschüttetenentfernung, nämlich die geringste Verschüttetenentfernung dmin, gespeichert wird, können in anderen Ausführungsformen alle oder eine ausgewählte Anzahl von Verschüttetenentfernungen gespeichert und angezeigt werden. Vorzugsweise wird für eine erfindungsgemäße Anzeige der gespeicherten Verschüttetenentfernungen eine Diskretisierung der Werte durchgeführt, um eine übersichtliche Anzeige mittels der weiter oben beschriebenen Distanzkreise 30 bis 32 zu erzielen.

### Bezugszeichenliste

- 10: Lawinenverschütteten-Suchgerät
- 11: Empfänger
- 12: Verarbeitungseinrichtung
- 13: Speichereinrichtung
- 14: Löscheinrichtung
- 20: Anzeigeeinrichtung
- 21: Steuereinrichtung
- 22: Unterscheidungseinrichtung
- 23: Betätigungseinrichtung
- 30-32: Distanzkreis
- 33-34: Tendenzpfeil
- 35: Mittelpunkt
- 40-43: Verschüttetenentfernung
- 50: Verschüttetenrichtung
- d: Aktuelle Verschüttetenentfernung
- dmin: Geringste Verschüttetenentfernung
- d1: Verschüttetenentfernungsschwellwert

## Patentansprüche

1. Verfahren zum Auffinden eines Verschütteten mittels eines Funkempfängers mit einer Richtcharakteristik umfassend die Schritte:
Empfangen von Signalen, die von einem Funksender des Verschütteten ausgesendet werden, mit dem Funkempfänger,
Verarbeiten der empfangenen Signale,
Anzeigen einer Ortsinformation (40-43, 50) des Verschütteten,
Wechseln zwischen einer Suchphase und einer Punktortungsphase,
wobei die Punktortungsphase das wiederholte Durchführen der folgenden Schritte beinhaltet:
Bestimmen einer aktuellen Verschüttetenentfernung (d),
Speichern der aktuellen Verschüttetenentfernung (d) und
Anzeigen der aktuellen Verschüttetenentfernung (d)
**dadurch gekennzeichnet, dass**
die Punktortungsphase das Anzeigen mindestens einer gespeicherten zuvor aufgenommenen Verschüttetenentfernung umfasst.

2. Verfahren nach Anspruch 1,
**dadurch gekennzeichnet,dass**
das Wechseln zwischen der Suchphase und der Punkortungsphase in Abhängigkeit von den empfangenen Signalen erfolgt.

3. Verfahren nach Anspruch 2,
**dadurch gekennzeichnet, dass**
das Wechseln von der Suchphase zur Punktortungsphase und/oder zurück dann erfolgt, wenn eine Stärke eines der Signale eine vorbestimmte Schwelle (d1) überschreitet bzw. unterschreitet.

4. Verfahren nach einem der vorhergehenden Ansprüche,
**dadurch gekennzeichnet, dass**
das Bestimmen der aktuellen Verschüttetenentfernung (d) in Abhängigkeit von den empfangenen Signalen, insbesondere deren Signalstärke, erfolgt.

5. Verfahren nach einem der vorhergehenden Ansprüche,
**dadurch gekennzeichnet, dass**
das Anzeigen in der Punktortungsphase das Anzeigen von mindestens einem graphischen Symbol (30-32, 35) umfasst.

6. Verfahren nach Anspruch 5,
**dadurch gekennzeichnet,dass**
das Anzeigen in der Punktortungsphase das Anzeigen von mindestens einem ersten graphischen Symbol (30-32, 35) für die aktuelle Verschüttetenentfernung (d) und mindestens einem zweiten graphischen Symbol (30-32, 35) für die mindestens eine gespeicherte Verschüttetenentfernung umfasst, wobei die Symbole (30-32, 35) für die aktuelle Verschüttetenentfernung (d) und die für die gespeicherte Verschüttetenentfernung unterscheidbar sind.

7. Verfahren nach Anspruch 6,
**dadurch gekennzeichnet, dass**
mindestens eines der ersten graphischen Symbole (30-32, 35) einen Distanzkreis (30-32) oder Teile eines Distanzkreises (30-32) mit einem Radius umfasst, der in Bezug zur aktuellen Verschüttetenentfernung (d) steht.

8. Verfahren nach Anspruch 6 oder 7,
**dadurch gekennzeichnet, dass**
mindestens eines der zweiten graphischen Symbole (30-32, 35) einen Distanzkreis (30-32) oder Teile eines Distanzkreises (30-32) mit einem Radius umfasst, der in Bezug zu einer gespeicherten Verschüttetenentfernung steht.

9. Verfahren nach einem der vorhergehenden Ansprüche,
**dadurch gekennzeichnet, dass**
die Punktortungsphase ein wiederholtes Bestimmen und Anzeigen derjenigen gespeicherten Verschüttetenentfernung umfasst, die der geringsten gespeicherten Verschüttetenentfernung (dmin) entspricht.

10. Verfahren nach einem der vorhergehenden Ansprüche,
**dadurch gekennzeichnet, dass**
die Suchphase ein Anzeigen einer, insbesondere numerischen, Verschüttetenentfernung (43) und/oder
ein Anzeigen einer Verschüttetenrichtung (50) umfasst.

11. Verfahren nach einem der vorhergehenden Ansprüche,
**dadurch gekennzeichnet, dass**
die gespeicherten Verschüttetenentfernungen wahlweise manuell oder bei einem Wechseln von der Punktortungsphase in die Suchphase gelöscht werden.

12. Verfahren nach einem der vorhergehenden Ansprüche,
**gekennzeichnet durch**
das Anzeigen von der aktuellen Verschüttetenentfernung (d) und genau einer gespeicherten geringsten Verschüttetenentfernung (dmin) in der Punktortungsphase.

13. Verfahren nach einem der vorhergehenden Ansprüche,
**dadurch gekennzeichnet, dass**
die Punktortungsphase ein Anzeigen mindestens einer Tendenz umfasst.

14. Verfahren nach Anspruch 13,
**dadurch gekennzeichnet, dass**
die Punktortungsphase genau dann das Anzeigen mindestens einer Tendenz umfasst, wenn die aktuelle Verschüttetenentfernung (d) größer als die geringste gespeicherte Verschüttetenentfernung (dmin) ist.

15. Verfahren nach einem der Ansprüche 13 oder 14,
**dadurch gekennzeichnet, dass**
das Anzeigen mindestens einer Tendenz das Anzeigen von mindestens einem dritten graphischen Symbol umfasst.

16. Verfahren nach nach Anspruch 15,
**dadurch gekennzeichnet, dass**
das dritte graphische Symbol mindestens einen Tendenzpfeil (33,34) umfasst.

17. Vorrichtung, insbesondere Lawinenverschütteten-Suchgerät (10), zum Auffinden eines Verschütteten, umfassend:
- einen Empfänger (11) mit einer Richtcharakteristik zum Empfangen von Signalen, die von einem Verschütteten ausgesendeten werden;
- eine Verarbeitungseinrichtung (12) zum Verarbeiten der empfangenen Signale und zum Bestimmen einer aktuellen Ortsinformation (40-43, 50), mindestens bestehend aus einer Verschüttetenentfernung (40-43) ;
- eine Anzeigeeinrichtung (20) zum Anzeigen der aktuellen Ortsinformation (40-43, 50);
- eine Steuereinrichtung (21) zum Steuern der Anzeigeeinrichtung (20), wobei die Steuereinrichtung (21) eine Unterscheidungseinrichtung (22) umfasst, die zwischen einer Suchphase und einer Punktortungsphase unterscheidet und wechselt;
- eine Speichereinrichtung (13) zum Speichern mindestens einer Ortsinformation (40-43, 50)
**dadurch gekennzeichnet, dass**
die Steuereinrichtung (21) die Anzeigeeinrichtung (20) derart steuert, dass in der Punktortungsphase die aktuelle Verschüttetenentfernung (d) und mindestens eine gespeicherte zuvor aufgenommene Verschüttetenentfernung angezeigt wird.

18. Vorrichtung nach Anspruch 17,
**dadurch gekennzeichnet, dass**
die Verarbeitungseinrichtung (12) derart ausgebildet ist, dass sie mindestens eine Verschüttetenentfernung (40-42) speichert.

19. Vorrichtung nach einem der Ansprüche 17 oder 18,
**dadurch gekennzeichnet, dass**
die Unterscheidungseinrichtung (22) derart ausgebildet ist, dass sie entsprechend der aktuellen Verschüttetenentfernung (d) zwischen der Punktortungsphase und der Suchphase unterscheidet und wechselt.

20. Vorrichtung nach einem der Ansprüche 17 bis 19,
**dadurch gekennzeichnet, dass**
die Unterscheidungseinrichtung (22) derart ausgebildet ist, dass sie dann zwischen der Suchphase und der Punktortungsphase wechselt, wenn die aktuelle Verschüttetenentfernung (d) einen vorgegebenen Wert (d1) unter- bzw. überschreitet.

21. Vorrichtung nach einem der Ansprüche 17 bis 20,
**dadurch gekennzeichnet, dass**
die Verarbeitungseinrichtung (12) derart ausgebildet ist, dass sie die aktuelle Verschüttetenentfernung (d) in Abhängigkeit der empfangenen Signale, insbesondere deren Signalstärke, bestimmt.

22. Vorrichtung nach einem der Ansprüche 17 bis 21,
**dadurch gekennzeichnet, dass**
die Steuereinrichtung (21) derart zur Steuerung der Anzeigeeinrichtung (20) ausgebildet ist, dass die Anzeigeeinrichtung in der Punktortungsphase mindestens ein graphisches Symbol (30-32, 35) angezeigt.

23. Vorrichtung nach Anspruch 22,
**dadurch gekennzeichnet, dass**
die Steuereinrichtung (21) derart zur Steuerung der Anzeigeeinrichtung (20) ausgebildet ist, dass die Anzeigeeinrichtung (20) in der Punktortungsphase mindestens ein erstes graphisches Symbol (30-32, 35) für die aktuelle Verschüttetenentfernung (d) und mindestens ein zweites graphisches Symbol (30-32, 35) für die mindestens eine gespeicherte Verschüttetenentfernung angezeigt, wobei die Symbole (30-32, 35) für die aktuelle Verschüttetenentfernung (d) und die für die gespeicherte Verschüttetenentfernung unterscheidbar sind.

24. Vorrichtung nach Anspruch 23,
**dadurch gekennzeichnet, dass**
mindestens eines der ersten graphischen Symbole (30-32, 35) einen Distanzkreis (30-32) oder Teile eines Distanzkreises (30-32) mit einem Radius umfasst, der in Bezug zur aktuellen Verschüttetenentfernung (d) steht.

25. Vorrichtung nach einem der Ansprüche 23 oder 24,
**dadurch gekennzeichnet, dass**
mindestens eines der graphischen Symbole (30-32, 35) einen Distanzkreis (30-32) oder Teile eines Distanzkreises (30-32) mit einem Radius umfasst, der in Bezug zur gespeicherten Verschüttetenentfernung steht.

26. Vorrichtung nach einem der Ansprüche 17 bis 25,
**dadurch gekennzeichnet, dass**
die Steuereinheit (21) eine Vergleichseinrichtung umfasst, die derart ausgebildet ist, dass diejenige gespeicherte Verschüttetenentfernung bestimmt wird, die der geringsten gespeicherten Verschüttetenentfernung (dmin) entspricht, und in der Punktortungsphase die Anzeigeeinrichtung (20) derart steuert, dass die Anzeigeeinrichtung diese geringste gespeicherte Verschüttetenentfernung (dmin) anzeigt.

27. Vorrichtung nach einem der Ansprüche 17 bis 26,
**dadurch gekennzeichnet, dass**
in der Suchphase die Steuereinrichtung (21) derart zur Steuerung der Anzeigeeinrichtung ausgebildet ist, dass eine, insbesondere numerische, Verschüttetenentfernung (45) und/oder einer Verschüttetenrichtung (50) angezeigt wird.

28. Vorrichtung nach einem der Ansprüche 17 bis 27,
**gekennzeichnet durch**
eine Löscheinrichtung (14), die derart ausgebildet ist, dass mindestens eine gespeicherte Verschüttetenentfernung aus der Speichereinrichtung (13) löscht.

29. Vorrichtung nach Anspruch 28,
**dadurch gekennzeichnet, dass**
die Löscheinrichtung (14) manuell mittels einer Betätigungseinrichtung (23) aktivierbar ist.

30. Vorrichtung nach einem der Ansprüche 28 oder 29,
**dadurch gekennzeichnet, dass**
die Unterscheidungseinrichtung (22) derart ausgebildet ist, dass sie die Löscheinrichtung (14) bei einem Wechsel aus der Punktortungsphase in die Suchphase aktiviert.

31. Vorrichtung nach einem der Ansprüche 17 bis 30,
**dadurch gekennzeichnet, dass**
die Steuereinrichtung (21) derart zur Steuerung der Anzeigeeinrichtung (20) ausgebildet ist, dass die Anzeigeeinrichtung (20) in der Punktortungsphase mindestens ein drittes graphisches Symbol zur Anzeige einer Tendenz umfasst.

32. Vorrichtung nach Anspruch 31,
**dadurch gekennzeichnet, dass**
die Steuereinrichtung (21) derart zur Steuerung der Anzeigeeinrichtung (20) ausgebildet ist, dass die Anzeigeeinrichtung (20) in der Punktortungsphase genau dann mindestens ein drittes graphisches Symbol zur Anzeige der Tendenz umfasst, wenn die aktuelle Verschüttetenentfernung größer als die geringste gespeicherte Verschüttetenentfernung ist.

33. Vorrichtung nach einem der Ansprüche 31 oder 32,
**dadurch gekennzeichnet, dass**
das dritte graphische Symbol mindestens einen Tendenzpfeil (33, 34) umfasst.

## Claims

1. Method of finding a person who has been buried alive, by means of a wireless receiver with a directional characteristic, comprising the steps:
Reception, by the wireless receiver, of signals transmitted from a wireless transmitter belonging to the buried person,
Processing of the received signals,
Display of information (40-43, 50) related to the location of the buried person, Alternation between a search phase and a point-localization phase,
wherein the point-localization phase includes repeatedly carrying out the following steps:
Determining a current target distance (d) that separates the receiver from the buried person,
Storing the current target distance (d) and
Displaying the current target distance (d),
**characterized in that**
the point-localization phase comprises the display of at least one target distance that was previously received and stored.

2. Method according to claim 1,
**characterized in that**
the change between the search phase and the point-localization phase is carried out in dependence on the received signals.

3. Method according to claim 2,
**characterized in that**
the change from the search phase to the point-localization phase and/or back occurs when a strength of one of the signals exceeds or falls below, respectively, a prespecified threshold (d1).

4. Method according to one of the preceding claims,
**characterized in that**
the current target distance (d) is determined in dependence on the received signals, in particular the strength of the signals.

5. Method according to one of the preceding claims,
**characterized in that**
the display in the point-localization phase comprises the display of at least one graphic symbol (30-32, 35).

6. Method according to claim 5,
**characterized in that**
the display in the point-localization phase comprises the display of at least one first graphic symbol (30-32, 35) for the current target distance (d) and at least one second graphic symbol (30-32, 35) for the at least one stored target distance, such that the symbols (30-32, 35) for the current target distance (d) can be distinguished from those for the stored target distance.

7. Method according to claim 6,
**characterized in that**
at least one of the first graphic symbols (30-32, 35) consists of a distance circle (30-32) or parts of a distance circle (30-32) with a radius that is related to the current target distance (d).

8. Method according to claim 6 or 7,
**characterized in that**
at least one of the second graphic symbols (30-32, 35) consists of a distance circle (30-32) or parts of a distance circle (30-32) with a radius that is related to a stored target distance (d).

9. Method according to one of the preceding claims,
**characterized in that**
the point-localization phase comprises a repeated determination and display of the stored target distance that corresponds to the smallest stored target distance (dmin).

10. Method according to one of the preceding claims,
**characterized in that**
the search phase comprises a display of an in particular numerical target distance (43) and/or a display of a target direction (50).

11. Method according to one of the preceding claims,
**characterized in that**
the stored target distances can be deleted, either optionally by manual means or when there is a change from the point-localization phase into the search phase.

12. Method according to one of the preceding claims,
**characterized by**
the display of the current target direction (d) and precisely one stored minimal target direction (dmin) in the point-localization phase.

13. Method according to one of the preceding claims,
**characterized in that**
the point-localization phase comprises a display of at least one tendency.

14. Method according to claim 13,
**characterized in that**
the point-localization phase comprises the display of at least one tendency precisely when the current target distance (d) is larger than the minimal stored target distance (dmin).

15. Method according to one of the claims 13 or 14,
**characterized in that**
the display of at least one tendency comprises the display of at least one third graphic symbol.

16. Method according to claim 15,
**characterized in that**
the third graphic symbol comprises at least one tendency arrow (33, 34).

17. Apparatus, in particular search appliance (10) for finding people who have been buried by avalanches, comprising:
- a receiver (11) with a directional characteristic, to receive signals transmitted by a buried person;
- a processing device (12) for processing the received signals and for determining a current item of locality information (40-43, 50), at least consisting of a target distance (40-43) separating the receiver from the buried person;
- a display device (20) to display the current locality information (40-43, 50);
- a control device (21) for controlling the display device (20), such that the control device (21) comprises a discrimination device (22) that discriminates between a search phase and a point-localization phase and changes from one to the other;
- a storage device (13) to store at least one item of locality information (40-43, 50)
**characterized in that**
the control device (21) controls the display device (20) in such a way that in the point-localization phase the current target distance (d) and at least one stored, previously determined target distance are displayed.

18. Apparatus according to claim 17,
**characterized in that**
the processing device (12) is designed so that it stores in memory at least one target distance (40-42).

19. Apparatus according to one of the claims 17 or 18,
**characterized in that**
the discrimination device (22) is designed so that according to the current target distance (d) it discriminates between the point-localization phase and the search phase, and changes from one to the other.

20. Apparatus according to one of the claims 17 to 19,
**characterized in that**
the discrimination device (22) is designed so that it changes from search phase to point-localization phase or the reverse when the current target distance is smaller or larger, respectively, than a prespecified value (d1).

21. Apparatus according to one of the claims 17 to 20,
**characterized in that**
the processing device (12) is designed so that it determines the current target distance (d) on the basis of the received signal, in particular the signal strength.

22. Apparatus according to one of the claims 17 to 21,
**characterized in that**
the control device (21) is designed to control the display device (20) in such a way that the display device in the point-localization phase displays at least one graphic symbol (30-32, 35).

23. Apparatus according to claim 22,
**characterized in that**
the control device (21) is designed to control the display device (20) in such a way that the display device (20) in the point-localization phase displays at least one first graphic symbol (30-32, 35) for the current target distance (d) and at least one second graphic symbol (30-32, 35) for the at least one stored target distance, such that the symbols (30-32, 35) for the current target distance (d) can be distinguished from those for the stored target distance.

24. Apparatus according to claim 23,
**characterized in that**
at least one of the first graphic symbols (30-32, 35) comprises a distance circle (30-32) or parts of a distance circle (30-32) with a radius that is related to the current target distance (d).

25. Apparatus according to one of the claims 23 or 24,
**characterized in that**
at least one of the graphic symbols (30-32, 35) comprises a distance circle (30-32) or parts of a distance circle (30-32) with a radius that is related to the stored target distance.

26. Apparatus according to one of the claims 17 to 25,
**characterized in that**
the control unit (21) comprises a comparison device designed to determine the particular stored target distance that corresponds to the smallest stored target distance (dmin), and in the point-localization phase controls the display device (20) so that the display device displays this smallest stored target distance (dmin).

27. Apparatus according to one of the claims 17 to 26,
**characterized in that**
in the search phase the control device (21) causes the display device to display an in particular numerical target distance (45) and/or a target direction (50).

28. Apparatus according to one of the claims 17 to 27,
**characterized by**
a deletion device (14) designed so that it deletes at least one stored target distance from the memory of the storage device (13).

29. Apparatus according to claim 28,
**characterized in that**
the deletion device (14) can be manually activated by means of an actuation device (23).

30. Apparatus according to one of the claims 28 or 29,
**characterized in that**
the discrimination device (22) is designed so that it activates the deletion device (14) when there is a change from the point-localization phase into the search phase.

31. Apparatus according to one of the claims 17 to 30,
**characterized in that**
the control device (21) is designed to control the display device (20) in such a way that the display device (20) during the point-localization phase comprises at least one third graphic symbol to display a tendency.

32. Apparatus according to claim 31,
**characterized in that**
the control device (21) is designed to control the display device (20) in such a way that the display device (20) during the point-localization phase comprises at least one third graphic symbol to display a tendency precisely when the current target distance is larger than the smallest stored target distance.

33. Apparatus according to one of the claims 31 or 32,
**characterized in that**
the third graphic symbol comprises at least one tendency arrow (33, 34).

## Revendications

1. Procédé de détection d'une personne ensevelie au moyen d'un récepteur radio avec un diagramme de directivité comprenant les étapes suivantes :
réception de signaux qui sont envoyés par un émetteur radio de la personne ensevelie, avec le récepteur radio,
traitement des signaux reçus,
affichage d'une information locale (40-43, 50) de la personne ensevelie,
alternance entre une phase de recherche et une phase de localisation ponctuelle,
la phase de localisation ponctuelle comprenant la réalisation répétée des étapes suivantes :
détermination d'une distance à la personne ensevelie (d) actuelle,
mémorisation de la distance à la personne ensevelie (d) actuelle et
affichage de la distance à la personne ensevelie (d) actuelle,
**caractérisé en ce que**
la phase de localisation ponctuelle comprend l'affichage d'au moins une distance à la personne ensevelie mémorisée et enregistrée auparavant.

2. Procédé selon la revendication 1,
**caractérisé en ce que**
l'alternance entre la phase de recherche et la phase de localisation ponctuelle s'effectue en fonction des signaux reçus.

3. Procédé selon la revendication 2,
**caractérisé en ce que**
l'alternance entre la phase de recherche et la phase de localisation ponctuelle et/ou retour s'effectue dans le cas où l'intensité de l'un des signaux dépasse ou ne dépasse pas un seuil (d1) prédéfini.

4. Procédé selon l'une quelconque des revendications précédentes,
**caractérisé en ce que**
la détermination de la distance à la personne ensevelie (d) actuelle s'effectue en fonction des signaux reçus, en particulier de leur intensité de signal.

5. Procédé selon l'une quelconque des revendications précédentes,
**caractérisé en ce que**
l'affichage dans la phase de localisation ponctuelle comprend l'affichage d'au moins un symbole (30-32, 35) graphique.

6. Procédé selon la revendication 5,
**caractérisé en ce que**
l'affichage dans la phase de localisation ponctuelle comprend l'affichage d'au moins un premier symbole (30-32, 35) graphique pour la distance à la personne ensevelie (d) actuelle et d'au moins un second symbole (30-32, 35) graphique pour l'au moins une distance à la personne ensevelie mémorisée, les symboles (30-32, 35) pour la distance à la personne ensevelie (d) actuelle et la distance à la personne ensevelie mémorisée pouvant être différenciés.

7. Procédé selon la revendication 6,
**caractérisé en ce que**
au moins l'un des premiers symboles (30-32, 35) graphiques comprend un cercle de distance (30-32) ou des parties d'un cercle de distance (30-32) avec un rayon qui est en rapport avec la distance à la personne ensevelie (d) actuelle.

8. Procédé selon la revendication 6 ou 7,
**caractérisé en ce que**
au moins l'un des seconds symboles (30-32, 35) graphiques comprend un cercle de distance (30-32) ou des parties d'un cercle de distance (30-32) avec un rayon qui est rapport avec une distance à la personne ensevelie mémorisée.

9. Procédé selon l'une quelconque des revendications précédentes,
**caractérisé en ce que**
la phase de localisation ponctuelle comprend une détermination et un affichage répétés de la distance à la personne ensevelie mémorisée, qui correspond à la distance à la personne ensevelie (dmin) mémorisée la plus faible.

10. Procédé selon l'une quelconque des revendications précédentes,
**caractérisé en ce que**
la phase de recherche comprend un affichage d'une distance, en particulier numérique, à la personne ensevelie (43) et/ou un affichage d'une direction de la personne ensevelie (50).

11. Procédé selon l'une quelconque des revendications précédentes,
**caractérisé en ce que**
les distances à la personne ensevelie mémorisées sont effacées au choix manuellement ou lors d'un passage de la phase de localisation ponctuelle à la phase de recherche.

12. Procédé selon l'une quelconque des revendications précédentes,
**caractérisé par**
l'affichage de la distance à la personne ensevelie (d) actuelle et exactement d'une distance à la personne ensevelie (dmin) mémorisée la plus faible dans la phase de localisation ponctuelle.

13. Procédé selon l'une quelconque des revendications précédentes,
**caractérisé en ce que**
la phase de localisation ponctuelle comprend l'affichage d'au moins une tendance.

14. Procédé selon la revendication 13,
**caractérisé en ce que**
la phase de localisation ponctuelle comprend l'affichage d'au moins
une tendance précisément dans les cas où la distance à la personne ensevelie (d) actuelle est plus grande que la distance à la personne ensevelie (dmin) mémorisée la plus faible.

15. Procédé selon l'une quelconque des revendications 13 ou 14,
**caractérisé en ce que**
l'affichage d'au moins une tendance comprend l'affichage d'au moins un troisième symbole graphique.

16. Procédé selon la revendication 15,
**caractérisé en ce que**
le troisième symbole graphique comprend une flèche de tendance (33, 34).

17. Dispositif, en particulier appareil de recherche de personne ensevelie sous une avalanche (10), pour retrouver une personne ensevelie, comprenant :
- un récepteur (11) avec un diagramme de directivité pour la réception de signaux qui sont émis par une personne ensevelie ;
- un dispositif de traitement (12) pour le traitement des signaux reçus et pour la détermination d'une information locale (40-43, 50) actuelle, comprenant au moins une distance à la personne ensevelie (40-43) ;
- un dispositif d'affichage (20) pour l'affichage de l'information locale (40-43, 50) actuelle ;
- un dispositif de commande (21) pour la commande du dispositif d'affichage (20), le dispositif de commande (21) comprenant un dispositif de différenciation (22), qui fait la différenciation et alterne entre une phase de recherche et une phase de localisation ponctuelle ;
- un dispositif de mémorisation (13) pour la mémorisation d'au moins une information locale (40-43, 50)
**caractérisé en ce que**
le dispositif de commande (21) commande le dispositif d'affichage (20) de telle sorte que, lors de la phase de localisation ponctuelle, la distance à la personne ensevelie (d) actuelle et au moins une distance à la personne ensevelie mémorisée et enregistrée auparavant sont affichées.

18. Dispositif selon la revendication 17,
**caractérisé en ce que**
le dispositif de traitement (12) est conçu de telle sorte qu'il mémorise au moins une distance à la personne ensevelie (40-42).

19. Dispositif selon l'une quelconque des revendications 17 ou 18,
**caractérisé en ce que**
le dispositif de différenciation (22) est conçu de telle sorte qu'il fait la différence et alterne en fonction de la distance à la personne ensevelie (d) actuelle entre la phase de localisation ponctuelle et la phase de recherche.

20. Dispositif selon l'une quelconque des revendications 17 à 19,
**caractérisé en ce que**
le dispositif de différenciation (22) est réalisé de telle sorte qu'il alterne alors entre la phase de recherche et la phase de localisation ponctuelle dans les cas où la distance à la personne ensevelie (d) actuelle est au-dessous ou au-dessus d'une valeur prédéfinie (d1).

21. Dispositif selon l'une quelconque des revendications 17 à 20,
**caractérisé en ce que**
le dispositif de traitement (12) est réalisé de telle sorte qu'il
détermine la distance à la personne ensevelie (d) actuelle en fonction des signaux reçus, en particulier de leur intensité de signal.

22. Dispositif selon l'une quelconque des revendications 17 à 21,
**caractérisé en ce que**
le dispositif de commande (21) est réalisé pour la commande du dispositif d'affichage (20) de telle sorte que le dispositif d'affichage affiche lors de la phase de localisation ponctuelle au moins un symbole (30-32, 35) graphique.

23. Dispositif selon la revendication 22,
**caractérisé en ce que**
le dispositif de commande (21) est réalisé pour la commande du dispositif d'affichage (20) de telle sorte que le dispositif d'affichage (20) affiche lors de la phase de localisation ponctuelle au moins un premier symbole (30-32, 35) graphique pour la distance à la personne ensevelie (d) actuelle et au moins un second symbole (30-32, 35) graphique pour l'au moins une distance à la personne ensevelie mémorisée, les symboles (30-32, 35) pour la distance à la personne ensevelie (d) actuelle et pour la distance à la personne ensevelie mémorisée pouvant être différenciés.

24. Dispositif selon la revendication 23,
**caractérisé en ce que**
au moins l'un des premiers symboles (30-32, 35) graphiques
comprend un cercle de distance (30-32) ou des parties d'un cercle de distance (30-32) avec un rayon qui est en rapport avec la distance à la personne ensevelie (d) actuelle.

25. Dispositif selon l'une quelconque des revendications 23 ou 24,
**caractérisé en ce que**
au moins l'un des symboles (30-32, 35) graphiques comprend un
cercle de distance (30-32) ou des parties d'un cercle de distance (30-32) avec un rayon qui est en rapport avec la distance à la personne ensevelie mémorisée.

26. Dispositif selon l'une quelconque des revendications 17 à 25,
**caractérisé en ce que**
l'unité de commande (21) comprend un dispositif de comparaison qui
est conçu de telle sorte qu'on détermine la distance à la personne ensevelie mémorisée qui correspond à la distance à la personne ensevelie (dmin) mémorisée la plus faible, et commande lors de la phase de localisation ponctuelle le dispositif d'affichage (20) de telle sorte que le dispositif d'affichage affiche la distance à la personne ensevelie (dmin) mémorisée la plus faible.

27. Dispositif selon l'une quelconque des revendications 17 à 26,
**caractérisé en ce que**
lors de la phase de recherche, le dispositif de commande (21) est réalisé pour la commande du dispositif d'affichage de telle sorte qu'une distance, en particulier numérique, à la personne ensevelie (45) et/ou une direction de la personne ensevelie (50) est affichée.

28. Dispositif selon l'une quelconque des revendications 17 à 27,
**caractérisé par**
un dispositif d'effacement (14), qui est conçu de telle sorte qu'au moins une distance à la personne ensevelie mémorisée est effacée du dispositif de mémoire (13).

29. Dispositif selon la revendication 28,
**caractérisé en ce que**
le dispositif d'effacement (14) peut être activé manuellement au moyen d'un dispositif d'actionnement (23).

30. Dispositif selon l'une quelconque des revendications 28 ou 29,
**caractérisé en ce que**
le dispositif de différenciation (22) est réalisé de telle sorte qu'il active le dispositif d'effacement (14) lors d'un passage de la phase de localisation ponctuelle à la phase de recherche.

31. Dispositif selon l'une quelconque des revendications 17 à 30,
**caractérisé en ce que**
le dispositif de commande (21) est conçu pour la commande du dispositif d'affichage (20) de telle sorte que le dispositif d'affichage (20) comprend dans la phase de localisation ponctuelle au moins un troisième symbole graphique pour l'affichage d'une tendance.

32. Dispositif selon la revendication 31,
**caractérisé en ce que**
le dispositif de commande (21) est réalisé pour la commande du dispositif d'affichage (20) de telle sorte que le dispositif d'affichage (20) comprend lors de la phase de localisation ponctuelle au moins un troisième symbole graphique pour l'affichage de la tendance précisément dans les cas où la distance à la personne ensevelie actuelle est supérieure à la distance à la personne ensevelie mémorisée la plus faible.

33. Dispositif selon l'une quelconque des revendications 31 ou 32,
**caractérisé en ce que**
le troisième symbole graphique comprend au moins une flèche de tendance (33, 34).
